# EUROPÄISCHE PATENTANMELDUNG

(11) **EP 1 804 520 A2**
(43) Veröffentlichungstag der Anmeldung: **04.07.2007**
(21) Anmeldenummer: 06027084.0
(22) Anmeldetag: 29.12.2006
(51) Int. Cl.: H04N 17/00

(54) **Telekommunikationssignalmessvorrichtung**

(30) Priorität: 29.12.2005 ES 200500020
(71) Anmelder: TELEVES, S.A., 15706 Santiago de Compostela (ES)
(72) Erfinder: Loyacono Pardo, Gabriel, 15706 Santiago de Compostela (ES); Ledo Gavieiro, José Luis, 15706 Santiago de Compostela (ES); Paz Bugallo, Benito, 15706 Santiago de Compostela (ES)
(74) Vertreter: Dosterschill, Peter

(57) **Zusammenfassung**

Die Erfindung betrifft eine Telekommunikationssignalmessvorrichtung, insbesondere für Rundfunk- und Fernsehfunksignale, das ein Signalabtast- und - identifizierungssystem zur sequentiellen Ausführung der ausgewählten Messungen und Speicherung der erzielten Messergebnisse enthält. Das System ist durch zwei Abstimmgeräte (41) und (42), einen A/D-Wandler (26), einen Mikroprozessor (21), einen flüchtigen Speicher (24), einen nichtflüchtigen Speicher (25) und einen Bildschirm (6) und eine Tastatur (81) gebildet, die es dem Benutzer ermöglichen, die durchzuführenden Messungen auszuwählen.

## Beschreibung

Die vorliegende Erfindung betrifft eine Telekommunikationssignalmessvorrichtung, insbesondere für Rundfunk- und Fernsehfunksignale nach Anspruch 1.

Gegenwärtig gibt es auf dem Markt verschiedene Fernsehfunksignalmessvorrichtungen. Die Patentanmeldungen ES 200301644, ES 20031659 beschreiben Messvorrichtungen mit verschiedenartigen Kennzeichen wie der Eingliederung eines Versorgungsladesystems durch Batterie, bei dem die Auswahl des Ladeverfahrens der Batterie automatisch erfolgt, oder der Eingliederung eines Synchronismus- und Video-Burst-Darstellungssystems, bei dem zum Erhalten und Darstellen des Synchronismus- und Burst-Signals eine Signalabtastung mit einer Geschwindigkeit erfolgt, die niedriger als die doppelte Bandbreite des abzutastenden Signals ist.

Im Allgemeinen basieren die Messvorrichtungen zur Überprüfung der Qualität von TV- und Rundfunksignalen gewöhnlich auf der Demodulation von Funkkanälen, die sich auf Frequenzspektren zwischen 5 MHz und 2,5 GHz befinden. Diese Vorrichtungen werden zum Messen von TV- und Rundfunksignalen in Sammelverteilungen - gemeinsame Telekommunikationsinfrastrukturen (ICT) - verwendet, bei denen sowohl die Anzahl der Kanäle als auch die Art der Signale (analog, digital, COFDM, QAM, QPSK) immer weiter zunimmt.

Diese Vielfalt und Menge von Kanälen bringt eine größere Sorgfalt bei der Arbeit mit sich und erfordert eine längere Zeit für Messung und Qualitätsprüfung der Einrichtung sowie einen nachfolgenden Aufwand zur Erstellung von Berichten, die die in dieser Einrichtung ausgeführten Messungen widerspiegeln.

Die Aufgabe der vorliegenden Erfindung ist die Verwirklichung
einer Telekommunikationssignalmessvorrichtung, insbesondere für Rundfunk- und Fernsehfunksignale, die ein Signalabtast- und -identifizierungssystem zur sequentiellen ununterbrochenen Ausführung der programmierten Messungen und Speicherung der erzielten Messergebnisse eingliedert, sodass die Überprüfung der Einrichtung mithilfe der Überwachung der kritischeren Parameter ermöglicht ist und diese in einem nichtflüchtigen Speicher der Vorrichtung registriert werden.

Diese Aufgabe wird mithilfe der in den Ansprüchen definierten Erfindung gelöst.

Die Erfindung weist mehrere Vorteile auf.

In einem erfindungsgemäßen Beispiel ist die Telekommunikationssignalmessvorrichtung, insbesondere für Rundfunk- und Fernsehfunksignale, dadurch gekennzeichnet, dass sie ein Signalabtast- und -identifizierungssystem zur sequentiellen Ausführung der programmierten Messungen und Speicherung der erzielten Messergebnisse enthält.

Dies weist den Vorteil auf, dass es die Ausführung der Messungen in kontinuierlicher Form und infolgedessen durch Vermeiden von Zeitverlust bei der Wederholung derselben schneller ermöglicht, wobei gleichzeitig das Vorsehen der gemessenen Parameter in geordneter Form ermöglicht ist.

In einem anderen Beispiel ist die Telekommunikationssignalmessvorrichtung, insbesondere für Rundfunk- und Fernsehfunksignale, gemäß der Erfindung dadurch gekennzeichnet, dass das Abtast-, Signalidentifikations- und Messungsspeicherungssystem durch zwei Abstimmgeräte, einen A/D-Wandler, einen Mikroprozessor, einen flüchtigen Speicher, einen nichtflüchtigen Speicher, Bildschirm und Tastatur gebildet ist.

Dies weist den Vorteil einer einfachen und kostengünstigen Implementierung des Abtast-, Signalidentifikations- und Speichersystems auf, da diese Vorrichtungen in anderen Funktionen der Messvorrichtung genutzt sind.

In einem anderen Beispiel ist die Telekommunikationssignalmessvorrichtung, insbesondere für Rundfunk- und Fernsehfunksignale, gemäß der Erfindung dadurch gekennzeichnet, dass das Abtast- und Messungsspeicherungsverfahren mittels folgender Schritte ausgeführt wird: Auswählen von Messparametern, Suchen von Signalen, Unterscheiden zwischen einem digitalem und einem analogem Signal, automatisches Durchführen von Messungen, Speichern der Ergebnisse im flüchtigen Speicher und Speichern im nichtflüchtigen Speicher.

Dies weist den Vorteil einer größeren Einfachheit und Schnelligkeit beim Durchführen von Messungen auf und ermöglicht außerdem die Speicherung der Daten zu ihrer späteren datentechnischen Verarbeitung.

In einem anderen erfindungsgemäßen Beispiel ist die Telekommunikationssignalmessvorrichtung, insbesondere für Rundfunk- und Fernsehfunksignale, dadurch gekennzeichnet, dass die durchzuführenden Messungen vom Benutzer über den Bildschirm und die Tastatur ausgewählt werden.

Dies weist den Vorteil auf, dass der Vorrichtung eine größere Vielseitigkeit verliehen ist.

Es wird nun ein nicht einschränkendes Beispiel einer Telekommunikationssignalmessvorrichtung, insbesondere für Rundfunk- und Fernsehfunksignale, gemäß der Erfindung auf der Grundlage der beiliegenden Figuren beschrieben.
Figur 1 zeigt ein allgemeines Blockdiagramm der Telekommunikationssignalmessvorrichtung gemäß der Erfindung.
Figur 2 zeigt eine schematische Konfiguration der Telekommunikationssignalmessvorrichtung gemäß der Erfindung.
Figur 3 zeigt ein Ausführungsschema von digitalen Messungen der Telekommunikationssignalmessvorrichtung gemäß der Erfindung.
Figur 4 zeigt ein Ablaufdiagramm der Ausführungsabfolge der Abtast-, Signalidentifikations- und Speicherfunktionen der Telekommunikationssignalmessvorrichtung gemäß der Erfindung.
Figur 5 zeigt eine praktische Ausführung eines Erkennungssystems für analoge und digitale Kanäle einer Telekommunikationssignalmessvorrichtung gemäß der Erfindung.

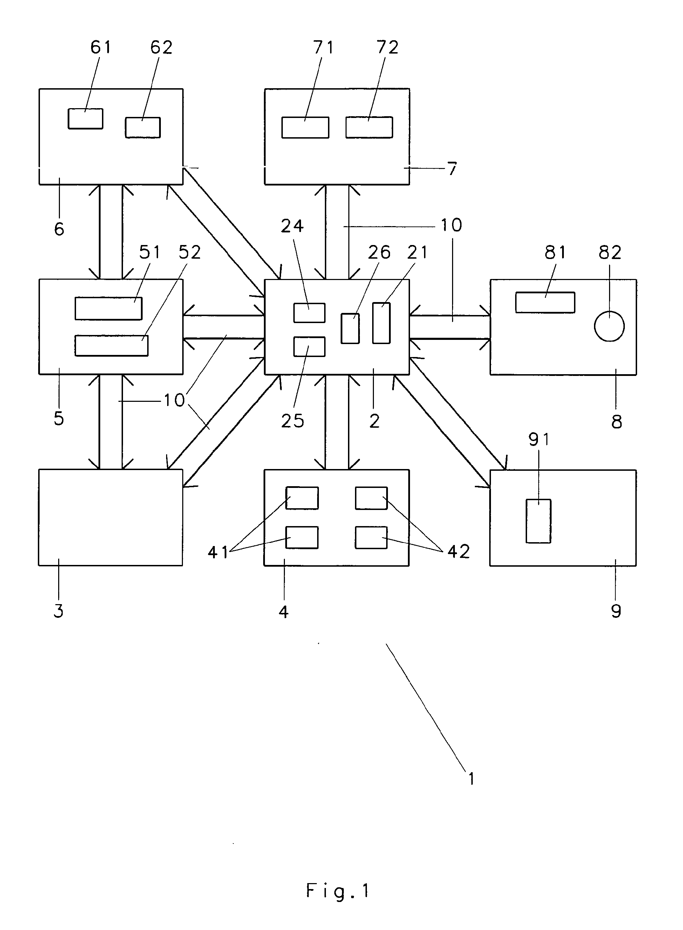

Figur 1 zeigt ein allgemeines Blockdiagramm der Telekommunikationssignalmessvorrichtung, insbesondere für Rundfunk- und Fernsehfunksianale, gemäß der Erfindung. Wie in der Figur gut zu erkennen, ist der zentrale Block 2 der Vorrichtung 1 durch einen Mikroprozessor 21, der die gesamte Steuerung und Verarbeitung von Messungen der Vorrichtung 1 durchführt, einen flüchtigen Speicher 24 zur Speicherung der durchgeführten Messungen, einen nichtflüchtigen Speicher 25 zur Speicherung von Programmen und einen A/D-Wand ler 26 gebildet.

Ein Block 3 ist für die Durchführung der Hauptmessungen zuständig, enthält das Messungserfassungssystem und formt unter Spannung jegliche Messung um, für die er programmiert ist. Diese Spannung wird vom A/D-Wandler 26 gelesen.

Ein Block 4 bildet das Modul für digitale Messungen und gliedert die Abstimmgeräte 41 und Demodulatoren 42 der digitalen Signale verschiedener QAM- und COFDM-Modulationen auf dem terrestrischen Fernsehband (47 bis 860 MHz) und QPSK auf dem Satellitenfernsehen-Signalverteilungsband (950 bis 2400 MHz) ein. Die Demodulatoren 41 sehen BER-Messinformation und andere Parameterarten zu den vorhergehenden Signalen vor.

Ein Block 5 führt die Verarbeitung des Signals zu seiner Sichtbarmachung aus und ist durch einen Video-Prozessor 51 und einen Audio-Prozessor 52 gebildet.

Ein Block 6 ist durch einen Anzeigebildschirm 61 und einen Lautsprecher 62 gebildet.

Ein Block 7 ist für die Energieversorgung und Energieversorgungsverwaltungssysteme zuständig, damit die Vorrichtung selbständig funktioniert, und durch ein selbständiges Versorgungsverwaltungssystem 71 und ein Modul mit externer Versorgung 72 gebildet.

Ein E/A-Schnittstellenblock 8 ist durch eine Tastatur 81 und Drehsteuerung 82 gebildet.

Ein Block 9 ist durch Erweiterungssteckplätze 91 für mögliche neue Messungsentwicklungen gebildet.

Die verschiedenen Blöcke 2, 3, 4, 5, 6, 7, 8 und 9, die die Vorrichtung bilden, sind mithilfe von Anschlusselementen 10 angeschlossen.

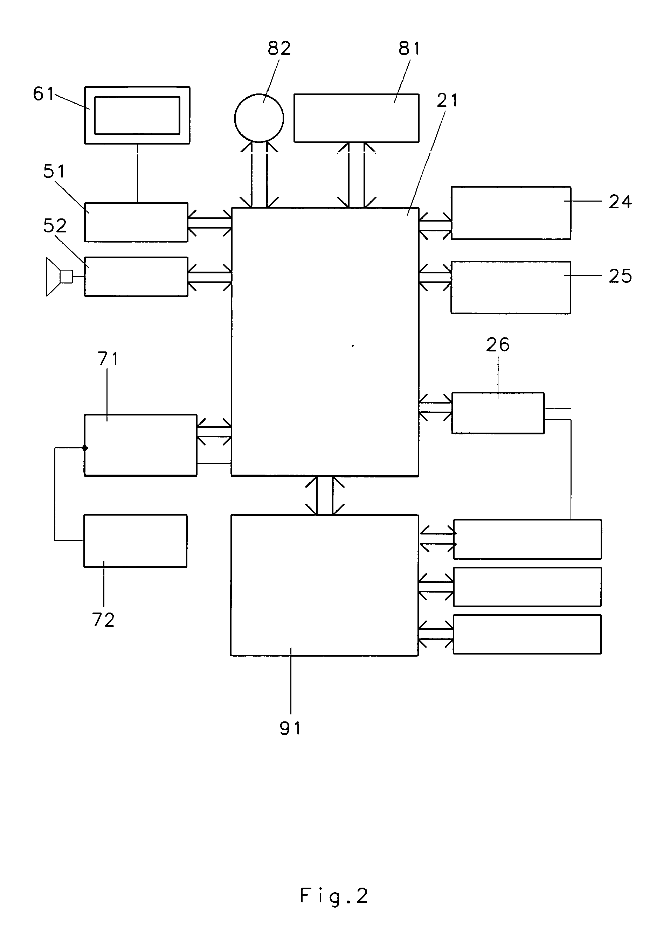

Wie aus Figur 2 zu entnehmen, ist der Mikroprozessor 21 der funktionelle Kern der Vorrichtung 1. Er ermöglicht es, ihre funktionellen Prozesse durchzuführen, führt ein Programm aus, das im nichtflüchtigen 2-MB-Speicher 25 (FLASH-Speicher) gespeichert ist und extern über einen RS232-Kommunikationsport und eine Anwendung programmiert sein kann, die in einem externen PC ausgeführt wird. Neben dem Programmcode sind in dem nichtflüchtigen Speicher 25 die Konfigurationen und aufgeschobenen Messungen der Vorrichtung 1 zu ihrer anschließenden Untersuchung in einem PC gespeichert.

Sobald der Programmcode eingelesen ist, lädt der Mikroprozessor 21 diesen Code in einen flüchtigen Speicher 24 (SDRAM), damit seine Ausführung schneller erfolgt und die Speicherung von variablen Datenstrukturen ermöglicht ist.

Der Mikroprozessor 21 weist eine Verbindung mit einem A/D-Wandler 26 auf, der die Umwandlungen Spannung-Digitaldaten zu ihrer späteren Speicherung und Verarbeitung vornimmt. Zur Ermöglichung der Erweiterung der Vorrichtung 1 wurde ein A/D-Wandlermodell (26) mit ausreichenden Analogeingängen zur Durchführung dieser Aufgabe gewählt.

Ein Audio-Prozessor 52 führt die Akustikalarmfunktionen aus, die die Vorrichtung 1 unter verschiedenen Umständen zu erstellen imstande ist: niedriger Ladepegel des selbständigen Versorgungssystems, außerhalb des Messbereichs erfasste Messungen usw.

Der Video-Prozessor 51 führt alle Menümischungsfunktionen aus, die der Mikroprozessor 21 erstellt, da zu den Funktionen des Mikroprozessors 21 die grafische Erstellung des Fenster- und Menüsystems für die Bedienung der Vorrichtung 1 gehört.

Der Video-Prozessor 51 gibt schließlich das Videosignal wieder, das auf einem TFT-Anzeigebildschirm 61 angezeigt wird.

Ein selbständiges Versorgungsverwaltungssystem 71 führt die Energieverwaltungsprozesse der Vorrichtung 1 aus. Diese kann über ein System von Batterien verschiedener Art, Größe und Gewichts und eine externe Versorgung 72 versorgt sein. Das Batteriesystem verleiht der Vorrichtung 1 Selbständigkeit an Orten, an denen die Versorgung von außen nicht verfügbar ist.

Das selbständige Versorgungsverwaltungssystem 71 steuert außerdem den Grad der Ladung des Batteriesystems derart, dass es feststellt, wann die Batterien aufgeladen werden müssen, oder den Zeitpunkt berücksichtigt, zu dem sie vollständig aufgeladen sind.

Die Vorrichtung 1 weist Erweiterungssteckplätze 91 für zukünftige Entwicklungen auf. Hier ist die Wachstumsfähigkeit der Vorrichtung für spezifische Messungsentwicklungen hervorzuheben.

Die externe Benutzeroberfläche enthält die Tastatur 81 und die Drehsteuerung 82 zur Navigation durch Menüs innerhalb der Software der Vorrichtung 1. Es sind bestimmte Schnellzugriffstasten auf bestimmte, gängigere Funktionen definiert und LED-Leuchtanzeigen zur Identifizierung der kritischeren Funktionen (angeschalteter Zustand, Ladung des Batteriesystems, Vorhandensein der äußeren Versorgungsvorrichtung usw.) beinhaltet.

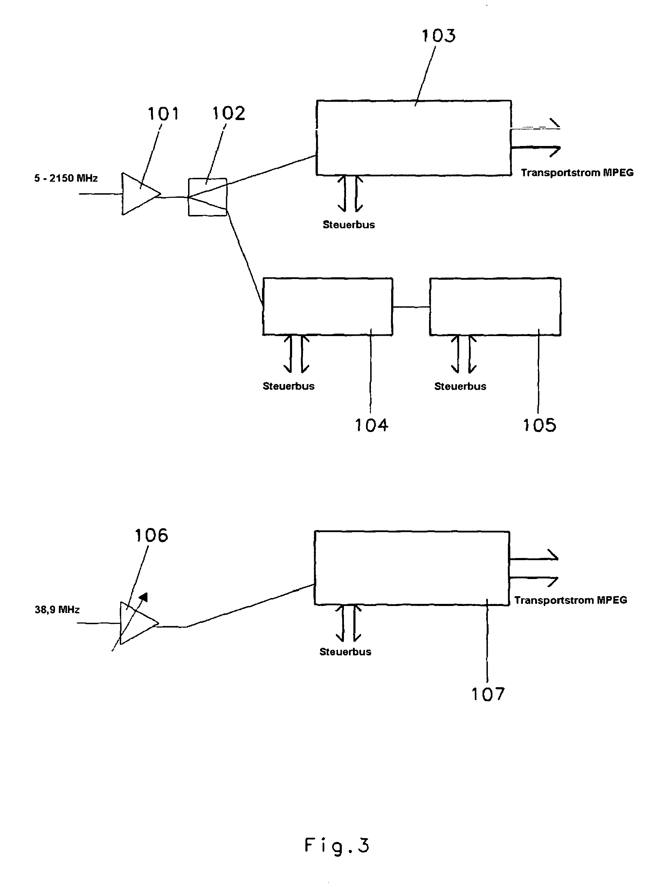

Figur 3 zeigt das Ausführungsschema von digitalen Messungen der Vorrichtung 1. Wie in der Figur gut zu erkennen, werden zwei Signale zugeleitet, ein Mehrbandsignal (5 bis 2150 MHz) zur Demodulation von COFDM- und QPSK-Signalen und eines zur Demodulation von QAM-Signalen auf Zwischenfrequenz von 38,9MHz.

Wie zu erkennen ist, durchläuft das Signal von 5 bis 2150 MHz einen Mehrbandverstärker 101 und danach einen Selektor 102, der der das Signal zum QPSK-Abstimmgerät-Demodulator 103 oder aber zum COFDM-Abstimmgerät 104 und COFDM-Demodulator 105 verzweigt. Der QPSK-Abstimmgerät-Demodulator 103 leitet die TS MPEG Transportsignale zu. Die BER-bezügliche Information wird über den Steuerbus erhalten. Der COFDM-Block verfährt genauso, nur sind die Blöcke Abstimmgerät 104 und Demodulator 105 getrennt.

Das 38,9-Signal durchläuft einen Verstärker 106 mit variablem Verstärkungsfaktor, der durch Aufwärtsregelung (CAG) betrieben ist und darauf einwirkt. Dieses Signal wird im QAM-Demodulatorblock 107 verarbeitet, der an seinem Ausgang das MPEG-Transportsignal zuleitet. Wie beim vorhergehenden Block werden die BER-bezüglichen Daten über den Steuerbus erhalten.

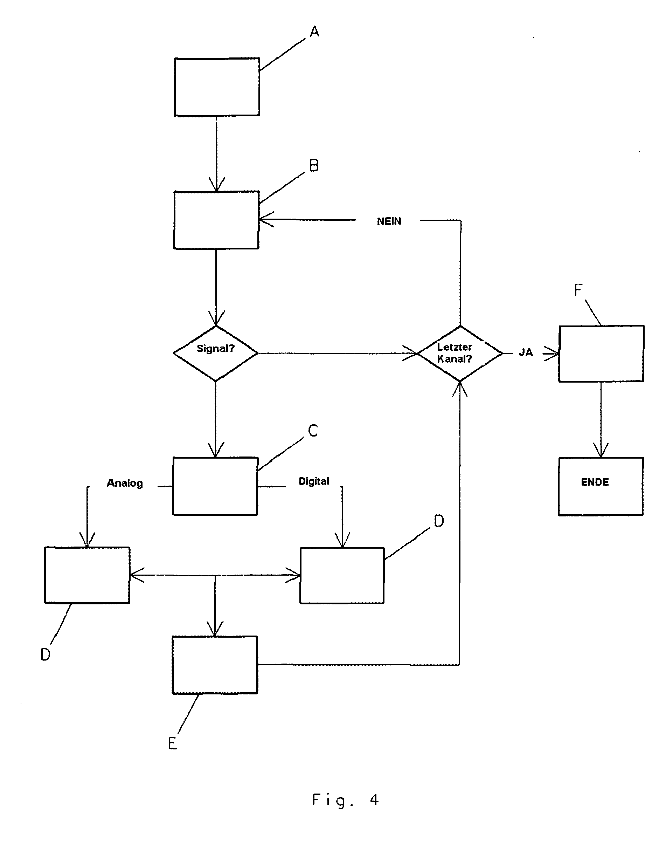

Figur 4 zeigt das Ablaufdiagramm der Ausführungsabfolge der Funktionen des Abtast- und Speichersystems der Signalmessvorrichtung gemäß der Erfindung:

### A. Auswahl von Messparametern

Der Benutzer wählt die Signalparameter (Frequenz, Bandbreite, Signalpegel, Modulation usw.) aus, die die Suche zur Unterscheidung des gewünschten Signals ermöglichen. Es wird außerdem angegeben, ob die Suche nur analoge, digitale oder beide Kanäle betrifft.

Der Benutzer trifft die Auswahl mithilfe des Bildschirms 6 und der Tastatur 81 (Figur 1).

### B. Signalsuche

Die Signalsuche wird mithilfe der Abstimmgeräte 41 und 104 derart durchgeführt, dass ein Scannen auf dem ausgewählten Suchband Kanal für Kanal oder nach Frequenz durchgeführt wird. Mithilfe des A/D-Wandlers 26 werden über den Mikroprozessor eine oder mehrere Lesungen vorgenommen und ein Mittelwert des Signalpegels erhalten, der durch die Messung auf einer bestimmten Frequenz erhalten wird. Dieser Wert wird mit dem vorher festgelegten Schwellenwert verglichen und dient als Bezug zum Bestimmen, ob ein Signal vorhanden ist oder nicht.

Die Signalsuche wird innerhalb eines gegebenen Spektralbereichs ausgeführt. Dieser Suchbereich kann variabel sein und sich lediglich auf bestimmte Funkfrequenzbänder (UHF, VHF, Rücklauf) konzentrieren oder den maximalen Gesamtbereich der Vorrichtung abdecken.

Diese Suche ist im Allgemeinen zum Suchen von Funkfrequenzsignalen (RF) konditioniert, die einen gegebenen (konfigurierbaren) Pegel übersteigen, da, wenn dieser Pegel übermäßig niedrig oder nicht vorhanden ist, der Algorithmus zahlreiche falsche Positivergebnisse bei seiner Suche nach gültigen Signalen ergäbe.

Ein anderer, konfigurierbarer Parameter ist die zu untersuchende Signalart. Dieser Parameter ermöglicht es, analoge, digitale oder aber beide Kanäle zu suchen, wodurch eine vollständige Untersuchung durchgeführt wird.

### C. Unterscheidung zwischen einem Digitalsignal und einem Analogsignal.

Wenn die Signalerkennung durchgeführt ist, wird der Schritt des Unterscheidens zwischen einem Digitalsignal und einem Analogsignal durchgeführt.

Diese Unterscheidung ist grundlegend, da die nachfolgenden Messungen auf der Signalart basieren. Genauer gesagt sind die Parameter des zu messenden Analogsignals Pegel, Signal-Rausch-Verhältnis, Videoträger-Audioträger-Verhältnis. Die Parameter eines Digitalsignals sind Stärke, Signal-Rausch-Verhältnis, BER-Messungen vor und nach Viterbi, abhängig von der auf dem Kanal eingesetzten Modulation.

### D. Automatische Durchführung von Messungen.

Je nach dem erkannten Signal (analog oder digital) wird eine im Mikroprozessor 21 ausgeführte Funktion angewendet, die unter Einwirkung auf die Abstimmgeräte 21, 103, 104, A/D-Wandler und Demodulatoren 42 die Messungen automatisch durchführt. Die typischen Messungen, die durchgeführt werden, sind Pegel, Audio-Video-Verhältnis, Signal-Rausch-Verhältnis im Falle des Analogsignals und Stärke, BER und Signal-Rausch-Verhältnis im Falle des Digitalsignals.

### E. Speicherung der Ergebnisse im flüchtigen Speicher:

Die Speicherung von Teilergebnissen der durchgeführten Messungen in der Abtastfunktion erfolgt im flüchtigen Speicher 24.

Nach der erfolgten Speicherung von Ergebnissen wird überprüft, ob der gesamte festgelegte Messbereich (Kanalzahl, Bandbreite...) im Parameterabschnitt abgedeckt wurde, wobei im gegenteiligen Fall der Prozess bei Schritt B erneut eingeleitet wird; andernfalls wird zum nächsten Schritt (Schritt F) weitergeleitet.

### F. Speicherung der Ergebnisse im nichtflüchtigen Speicher

Speicherung der erzielten Information (Parameter der aufgefundenen Kanäle mit ihrer kompletten Kennzeichnung) in einem nichtflüchtigen Speicher (FLASH, NAND usw.) zur nachfolgenden Untersuchung. Die Speicherung ermöglicht es, das erzielte Register zu identifizieren, sodass mehrfache verschiedene Abtastungen durchgeführt werden können, wodurch der Steuerprozess von Einrichtungen mit TV- und Radiokanalverteilung (ICT) beschleunigt sein kann. Es ist möglich, die gespeicherte Information auf einen PC herunterzuladen, und unter Benutzung eines Softwarepakets können automatisch Berichte und Auflistungen erstellt werden.

Zum Herunterladen der erzielten Ergebnisse über die Anschlusselemente 10 auf eine externe Anwendung, die in einem PC oder kompatiblen Rechner ausgeführt wird, werden die Ergebnisse in einem nicht flüchtigen Speicher 25 gespeichert. Mit dem Herunterladen dieser Daten auf eine Anwendung, die in einem PC ausgeführt wird, ist eine Flexibilität zum Auslegen und Darstellen dieser Daten auf geordnete und professionelle Art und Weise erzielt.
Diese Anwendung stellt eine Kommunikation über einen RS-232 Standardport her, der sich im Anschlussblock 10 befindet, und der Speicherdump des nichtflüchtigen Speichers erfolgt über diesen Port.

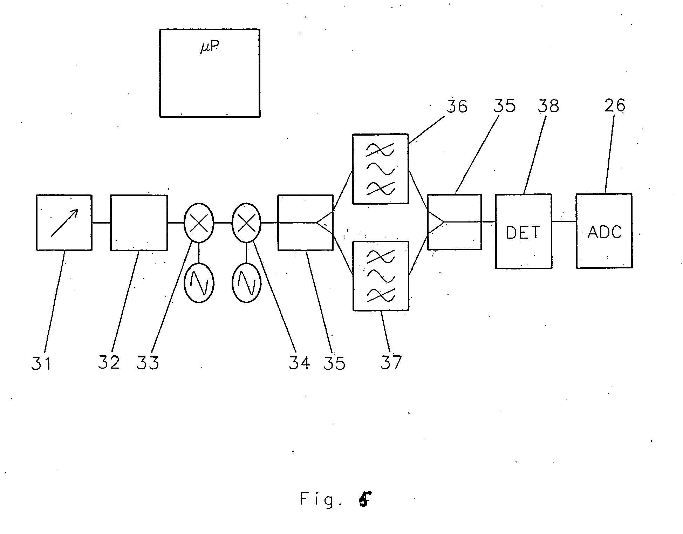

Figur 5 zeigt eine praktische Ausführung eines Erkennungssystems für analoge und digitale Kanäle einer Telekommunikationssignalmessvorrichtung gemäß der Erfindung. Wie in der Figur gut zu erkennen, ist das Erkennungssystem für analoge und digitale Kanäle durch einen Dämpfer 31 gebildet, der das Funkfrequenzsignal von zwischen 5 und 2150 MHz dämpft, um es an die erforderlichen Mischpegel anzupassen. Ein Abstimmgerät 32 stimmt den ausgewählten Kanal auf die Videoträgerfrequenz plus einen Zuwachs ab. Der Wert des Zuwachses hängt davon ab, ob sich der Kanal auf dem terrestrischen Band (z.B. 5 bis 862 MHz) oder auf dem Satellitenband (z.B. 950 bis 2150 MHz) befindet. Ein erstes Mischgerät 33 formt das Signal auf eine Zwischenfrequenz von beispielsweise 38,9 MHz um, und mithilfe eines zweiten Mischgeräts 34 wird eine zweite Zwischenfrequenz von beispielsweise 10,7 MHz erhalten. Ein Satz Schalter 35 wählt einen ersten Filterblock bzw. Filter 36 oder einen zweiten Filterblock bzw. Filter 37 aus. Der erste Filterblock 36 ist durch zumindest einen Breitbandfilter (z.B. 3 MHz) gebildet. Der zweite Filterblock 37 ist durch zumindest einen Schmalbandfilter (z.B. 250 KHz) gebildet. Die Bandbreite BW1 des ersten Filterblocks 36 muss zumindest fünf Mal so groß wie die Bandbreite BW2 des zweiten Filterblocks 37 sein.

Wenn der erste Filterblock 36 ausgewählt ist, erholt sich die Energie des Videoträgers teilweise, falls das Signal einem analogen Fernsehkanal entspricht, wobei im Detektor 38 ein LF1-Signalpegel erhalten wird. Wenn der zweite Filterblock 37 ausgewählt ist, erholt sich die Energie des Videoträgers des analogen Kanals nicht, wobei im Detektor 38 ein LF2-Signalpegel erhalten wird. Die Pegeldifferenz LF1-LF2 muss über einem bestimmten Wert liegen, um zu folgern, dass der zu messende Kanal ein analoger Kanal ist.

Für den Fall eines digitalen Kanals beträgt die im Detektor 38 erkannte Differenz zwischen der mithilfe des ersten Signalsblocks 36 und des zweiten Signalblocks 37 durchgeführten Messung ungefähr 10log (BW1/ BW2), wobei BW1 bzw. BW2 die Bandbreiten des ersten bzw. zweiten Filterblocks 36 und 37 sind.

Insbesondere ist die Vorrichtung bzw. der Detektor 38 und das Steuerwerk (Mikroprozessor µP, 21) wie folgt ausgestaltet: der Detektor 38 und das Steuerwerk µP arbeiten in der Weise zusammen, dass ein erstes Signal LF1, das einen Signalpegel am Ausgang des ersten Filters 36 bezeichnet, und ein zweites Signal LF2, das einen Signalpegel am Ausgang des zweiten Filters 37 bezeichnet, in der Weise miteinander verknüpft werden, dass für einen ersten Fall, bei dem die Differenz (LF1-LF2) der beiden Signale LF1, LF2 im wesentlichen größer als 10 db ist , ein Kanal als analoger Kanal erkannt wird. Für einen zweiten Fall, bei dem die Differenz (LF1-LF2) der beiden Signale LF1, LF2 im wesentlichen gleich 10 log (BW1/BW2) ist, insbesondere in der Größenordnung von 2 bis 3 db, wird ein Kanal als digitaler Kanal erkannt.
Die Energie eines Analogfernsehsignals entspricht im wesentlichen der Energie der Videoträgerfrequenz; die Energie eines Digitalfernsehsignals verteilt sich homogen über jeweils einen Kanal.

Das Breitbandfilter 36 bewirkt, dass der Signalpegel (Videoträgerfrequenz) am Ausgang im Falle eines Analogsignals relativ hoch ist , während das Schmalbandfilter 37 bewirkt, dass der Signalpegel am Ausgang im Falle eines Analogsignals relativ niedrig ist. Die Differenz LF1 - LF2 ist relativ groß, liegt in Abhängigkeit der konkreten Ausgestaltung der Filter in der Grö0enordnung von mindestens 10 dB, insbesondere in der Grö0enordnung von 20 bis 30 dB.

Im Falle eines Digitalsignals hängen die Signalpegel an dem Ausgängen der Filter 36 und 37 ausschließlich von deren Bandbreiten BW1, BW2 ab. Im Falle idealer Filter läge die Differenz LF1 - LF2 bei 10 log (BW1/BW2), realiter liegt sie, in Abhängigkeit der konkreten Ausgestaltung der Filter in der Größenordnung von 2 bis 3 dB.

Mithilfe eines A/D-Wandlers 26 werden die Differenzen der erkannten Pegel digitalisiert und an einen Mikroprozessor übertragen, der die analoge oder digitale Beschaffenheit des zu messenden Fernsehkanals bestimmt und die Messungen festlegt, die gemäß der Art des Kanals (analog/digital) durchzuführen sind. Auf diese Art und Weise führt die Vorrichtung, wenn der analoge oder digitale Kanal erkannt ist, die entsprechenden, vom Benutzer programmierten Messungen durch.

### Bezugszeichenliste:

- 1: Telekommunikationssignalmessvorrichtung
- 2: zentraler Block
- 21: Mikroprozessor
- 24: flüchtiger Speicher
- 25: nichtflüchtiger Speicher
- 26: A/D-Wandler
- 3: Block: Durchführungen von Hauptmessungen
- 4: Block : Modul für digitale Messungen
- 41: Abstimmgeräte
- 42: Demodulatoren
- 5: Block: Verarbeitung des Signals zu seiner Sichtbarmachung
- 51: Video-Prozessor
- 52: Audio-Prozessor
- 6: Block: Bildschirm und Lautsprecher
- 61: Anzeigebildschirm
- 62: Lautsprecher
- 7: Block : Verwaltung der Versorgungssysteme
- 71: Selbständiges Versorgungsverwaltungssystem
- 72: externes Versorgungsmodul
- 8: Block: E/A-Schnittstelle
- 81: Tastatur
- 82: Drehsteuerung
- 9: Block: Erweiterungssteckplätze
- 91: Erweiterungssteckplätze
- 10: Anschlusselemente
- 101: Mehrbandverstärker
- 102: Selektor
- 103: Abstimmgerät-Demodulator
- 104: Abstimmgerät
- 105: Demodulator
- 106: Verstärker mit variablem Verstärkungsfaktor
- 107: Demodulatorblock

## Patentansprüche

1. Telekommunikationssignalmessvorrichtung, insbesondere für Rundfunk- und Fernsehfunksignale, **dadurch gekennzeichnet, dass** sie ein Signalabtast- und -identifizierungssystem zur sequentiellen Ausführung programmierter Messungen und Speicherung erzielter Messergebnisse enthält.

2. Telekommunikationssignalmessvorrichtung nach Anspruch 1, **dadurch gekennzeichnet, dass** das Signalabtast- und -identifizierungssystem durch zwei Abstimmgeräte (41) und (42), einen A/D-Wandler (26), einen Mikroprozessor (21), einen flüchtigen Speicher (24) und einen nichtflüchtigen Speicher (25), einen Bildschirm (6) und eine Tastatur (81) gebildet ist.

3. Telekommunikationssignalmessvorrichtung nach Anspruch 2, **dadurch gekennzeichnet, dass** dem Mikroprozessor (21) ein Steuerungsprogramm zugeordnet ist, das in der Weise ausgestaltet ist, dass folgende Schritte durchgeführt werden: Auswählen von Messparametern, Suchen von Signalen, Unterscheiden zwischen einem digitalem und einem analogem Signal, automatisches Durchführen von Messungen, Speichern der Messergebnisse in einem flüchtigen Speicher und in einem nichtflüchtigen Speicher.

4. Telekommunikationssignalmessvorrichtung nach einem der vorstehenden Ansprüche, mit einem System, das erkennt, ob ein zu messender Kanal ein analoger oder ein digitaler Kanal ist, **dadurch gekennzeichnet, dass** das System, das erkennt, ob der zu messende Kanal ein analoger Kanal oder ein digitaler Kanal ist, ein erstes Filter (36) mit einer ersten Bandbreite (BW1), ein zweites Filter (37) mit einer zweiten Bandbreite (BW2), einen Detektor (38) und ein Steuerwerk (µP) enthält, und dass der Detektor (38) und das Steuerwerk (µP) in der Weise zusammenarbeiten, dass ein erstes Signal (LF1), das einen Signalpegel am Ausgang des ersten Filters (36) bezeichnet, und ein zweites Signal (LF2), das einen Signalpegel am Ausgang des zweiten Filters (37) bezeichnet, in der Weise miteinander verknüpft werden, dass für einen ersten Fall, bei dem die Differenz (LF1-LF2) der beiden Signale (LF1, LF2) im wesentlichen größer als 10 db ist, ein Kanal als analoger Kanal erkannt wird, und dass für einen zweiten Fall, bei dem die Differenz (LF1-LF2) der beiden Signale (LF1, LF2) im wesentlichen gleich 10 log (BW1/BW2) ist, insbesondere in der Größenordnung von 2 bis 3 db, ein Kanal als digitaler Kanal erkannt wird.

5. Telekommunikationssignalmessvorrichtung nach Anspruch 4, **dadurch gekennzeichnet, dass** die erste Bandbreite (BW1) des ersten Filters (36) mindestens fünf Mal größer als die zweite Bandbreite (BW2) des zweiten Filters (37).

6. Telekommunikationssignalmessvorrichtung nach einem der Ansprüche 4 oder 5, **dadurch gekennzeichnet, dass** das erste Filter (36) durch ein einziges Filter gebildet ist.

7. Telekommunikationssignalmessvorrichtung nach einem der Ansprüche 4 bis 6, **dadurch gekennzeichnet, dass** das zweite Filter (37) durch ein einziges Filter gebildet ist.

8. Verfahren zum Abtasten von Signalen, insbesondere von Rundfunk- und Fernsehsignalen; **dadurch gekennzeichnet, dass** das Verfahren mittels folgender Schritte ausgeführt wird: Auswählen von Messparametern, Suchen von Signalen, Unterscheiden zwischen einem digitalem und einem analogem Signal, automatisches Durchführen von Messungen, Speichern der Messergebnisse in einem flüchtigen Speicher und in einem nichtflüchtigen Speicher.

9. Verfahren nach Anspruch 8, **dadurch gekennzeichnet, dass** durchzuführende Messungen von einer Bedienperson über einen Bildschirm (6) und eine Tastatur (81) ausgewählt werden.
